# FASCICULE DE BREVET EUROPEEN

(11) **EP 0 633 704 B1**
(45) Date de publication et mention de la délivrance du brevet: **17.03.2004**
(21) Numéro de dépôt: 94420174.8
(22) Date de dépôt: 15.06.1994
(51) Int. Cl.: H04Q 1/02, H04M 1/02

(54) **Dispositif terminal d'interconnexion téléphonique d'abonné**
Einrichtung zum Anschliessen eines Endgerätes mit einer Teilnehmerfernsprechleitung
Device for connection of a terminal to a subscriber telephone line

(30) Priorité: 07.07.1993 FR 9308584
(43) Date de publication de la demande: 11.01.1995
(73) Titulaire: POUYET INTERNATIONAL, F-94200 Ivry-sur-Seine (FR)
(72) Inventeur: Bonvallat, Pierre, F-74300 Cluses (FR); Fasce, Xavier, F-74300 Cluses (FR)
(74) Mandataire: Vuillermoz, Bruno

(56) Documents cités:
- EP-A- 0 127 349
- WO-A-92/04794
- FR-A- 2 660 134
- US-A- 4 562 311

## Description

La présente invention se rapporte à un dispositif terminal d'interconnexion téléphonique d'abonné.

Un tel dispositif est normalement réalisé sous forme d'un boitier qui peut être disposé à l'extérieur, et donc soumis aux intempéries. Il a pour but de raccorder la ligne téléphonique à un ou plusieurs abonnés.

Il existe actuellement, en particulier aux Etats-Unis d'Amérique, des boitiers de ce type, dénommés "Network Interface Devices", qui sont déjà particulièrement bien étudiés en ce sens qu'ils comportent, dans un seul et même boitier, deux compartiments nettement séparés :
. un premier compartiment qui est directement accessible lorsque l'on ouvre le couvercle du boitier, et qui contient la connectique propre à l'installation de l'abonné, ou des abonnés s'il y a plus d'une ligne téléphonique d'abonné reliée par ce boîtier ;
. un second compartiment qui n'est alors accessible que si l'on ouvre un second couvercle, généralement fermé par plombage, et qui contient la connectique propre à l'opérateur, c'est-à-dire à l'Administration publique ou privée chargée de la distribution téléphonique.

Du côté de la connectique propre à l'abonné, ou aux abonnés, ces dispositifs modernes utilisent généralement en outre une prise de test, généralement de type "modular jack" qui est placée en amont des deux bornes de raccordement au boitier de la ligne de l'installation de l'abonné, et électriquement en série avec celles-ci.

Cette prise de test se compose d'une part d'une embase femelle "modular jack" qui est branchée directement sur la ligne d'arrivée, en sortie du compartiment réservé à ladite Administration, et d'autre part d'une prise ou fiche mâle complémentaire, également de type "modular jack", qui est prévue à l'extrémité d'une portion de câble à deux conducteurs, dont l'autre extrémité est connectée aux deux bornes précitées de raccordement au boîtier interface des deux fils de la ligne de l'installation privée de l'abonné. Si l'on introduit cette prise mâle dans cette embase femelle, la continuité de connexion est assurée, et cette installation privée est alimentée. Elle ne l'est plus si l'on retire alors cette prise mâle, mais en revanche l'abonné peut alors, pour tester le bon fonctionnement de l'installation propre à ladite Administration en cas de panne, brancher directement son terminal ou poste téléphonique (qui est lui-aussi équipé d'une fiche "modular jack") sur cette embase femelle. Si son poste téléphonique fonctionne alors normalement, c'est que la panne ne provient pas de l'installation propre à l'Administration, mais de son installation privée.

Dans ce genre de boîtier d'interconnexion, toutes les liaisons sont des liaisons filaires qui ont pour inconvénients d'être longues et peu pratiques à installer, ainsi que d'être sujettes à la corrosion.

Par ailleurs, du fait que tous les raccordements s'effectuent par vissages sur des extrémités dénudées de fils de liaison, il est aisé pour un fraudeur de se brancher, en utilisant les vis de connexion, sur la ligne d'un abonné sans que ce dernier ne s'en aperçoive. Il est aussi possible de frauder de la même façon en utilisant une adaptation à sorties multiples pour prise "Modular Jack".

On connaît d'après le WO 92/04794 une interface, qui comporte une prise "modular jack" femelle pour test de la ligne d'arrivée. Il est prévu, pour cette prise, une pièce mâle complémentaire. Lorsque cette pièce est enfichée, elle assure une liaison électrique entre les fils d'arrivée et de départ. A contrario, lorsqu'elle est retirée, cette liaison n'est plus assurée, mais on peut alors y brancher directement son téléphone sur la ligne d'arrivée.

On connaît également d'après le US 4.562.311 une interface d'abonné dans laquelle les liaisons sont réalisées en circuits découpés, à l'exception d'un module, à composants électroniques, qui est connecté par liaisons filaires. Cette interface comporte un boîtier qui se ferme par un couvercle coulissant. Lorsque le couvercle est retiré, les liaisons entre les bornes d'arrivée, côté distributeur, et de départ, côté abonné, ne sont pas assurées, car le couvercle comporte des pièces de liaison qui sont absentes. On peut alors tester la ligne d'arrivée en branchant son téléphone dans une prise femelle prévue à cet effet et connectée à cette dernière. En revanche, la mise en place du couvercle positionne correctement les deux pièces de liaison, ce qui assure alors la liaison avec l'abonné.

En outre, dans les boîtiers d'interconnexion connus, on a affaire à une réalisation qui est figée côté Administration : le terminal est prévu pour recevoir soit une ou deux lignes, soit uniquement une ligne et pas deux ou plus de deux lignes. Finalement, dans le cas où l'on veut pouvoir brancher soit une, soit deux, lignes d'arrivée côté Administration, on constate que le compartiment, côté Administration, est équipé d'éléments qui sont surabondants dans le cas où on ne branche en réalité qu'une seule ligne d'arrivée côté Administration, qui n'est reliée alors qu'à une seule ligne de départ, côté abonné. En effet, si dans une telle réalisation, on désire seulement ne brancher que la ligne d'arrivée, le client achète néanmoins un terminal d'interconnexion qui est équipé, côté Administration, de tous les éléments qui sont relatifs au branchement d'une deuxième ligne dont il n'a pas besoin. Généralement néanmoins, il est cependant souhaitable de pouvoir ultérieurement brancher une deuxième ligne sur ce terminal. Il en résulte une perte économique dommageable, qu'il serait souhaitable d'éviter afin d'accroître la compétitivité du terminal d'interconnexion téléphonique.

L'invention vise à remédier à ces inconvénients des dispositifs connus et décrits ci-dessus, tout en présentant néanmoins tous les avantages.

Elle se rapporte à cet effet à un dispositif terminal d'interconnexion téléphonique d'au moins un abonné, comprenant
- un boîtier divisé en deux compartiments, dont un premier compartiment contient une connectique propre à une Administration ou Entreprise chargée de la distribution téléphonique, et dont un second compartiment contient une connectique propre à la ou aux lignes téléphoniques de l'abonné qui se raccordent à la ou aux lignes correspondantes de l'Administration ou Entreprise, par l'intermédiaire de ce dispositif terminal d'interconnexion, et
- une prise de test, présente dans le second compartiment, destinée à chaque ligne, et composée d'une prise téléphonique femelle branchée directement sur la ligne de ladite Administration ou Entreprise et en sortie du premier compartiment réservé à cette dernière, la prise de test étant apte à recevoir une prise mâle conjuguée qui équipe normalement un terminal ou poste téléphonique,

Conformément à la présente invention, le dispositif terminal d'interconnexion téléphonique est caractérisé en ce qu'il comprend en outre :
- des interconnexions électriques réalisées par des moyens de liaison non-filaires tels que des lames métalliques ou des circuits métalliques découpés ;
- un volet de fermeture de ladite prise de test, associé à des moyens électromécaniques qui, lorsqu'on ouvre ce volet pour dégager la prise de test qu'il recouvre, afin de brancher la prise mâle conjuguée dans ladite prise femelle, entraînent automatiquement, par effet d'interrupteur électrique, la déconnexion électrique des circuits de ligne placés en aval de cette prise de test, c'est-à-dire des circuits de ligne propres à l'installation privée de l'abonné ; et

- au moins un module enfichable qui contient notamment ladite prise téléphonique femelle ainsi que ledit volet de fermeture associé audits moyens électromécaniques.

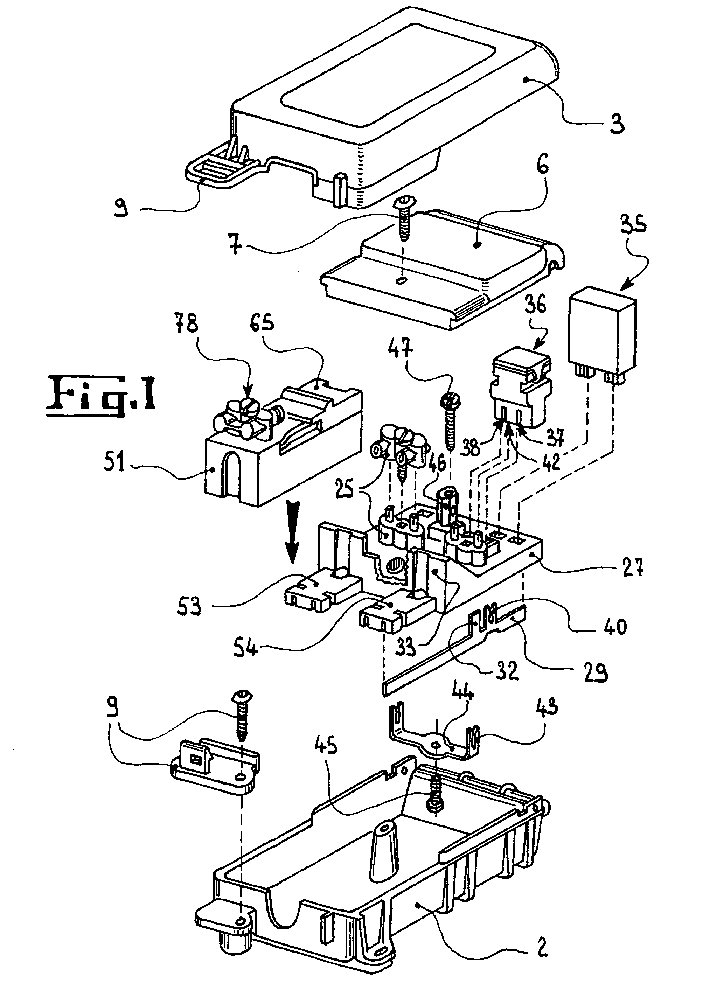

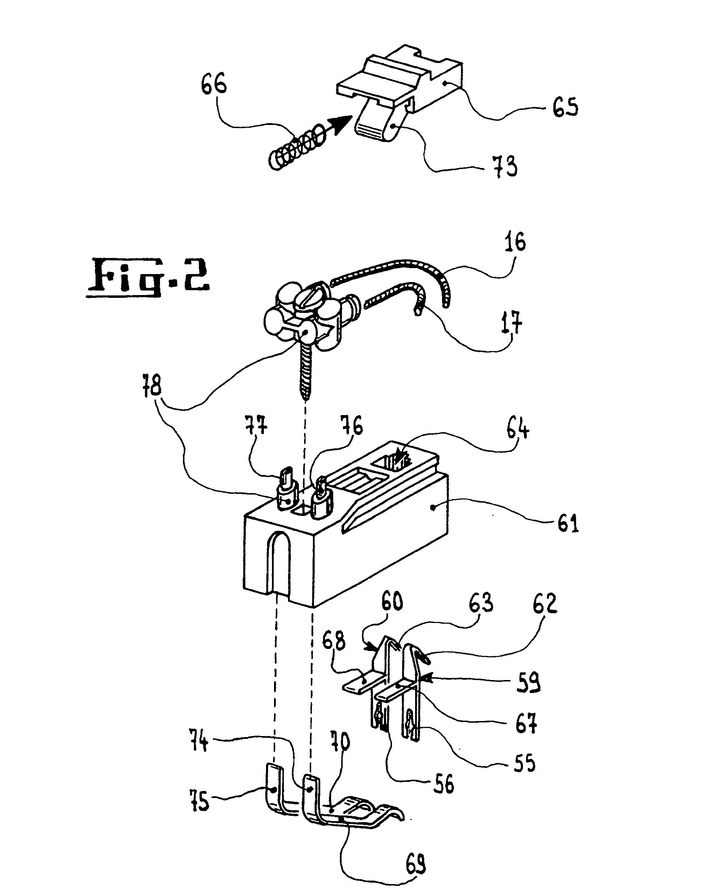

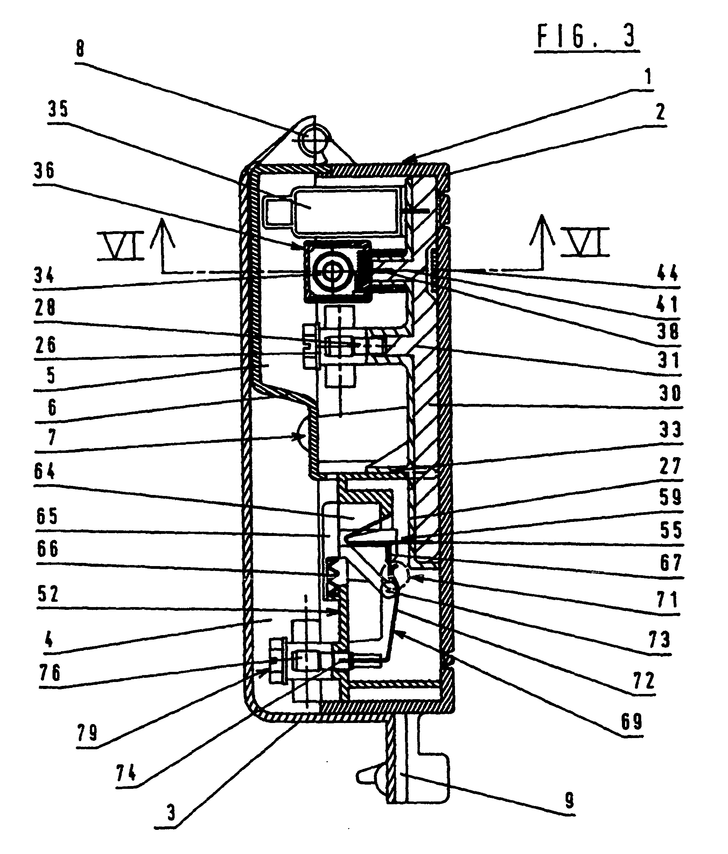

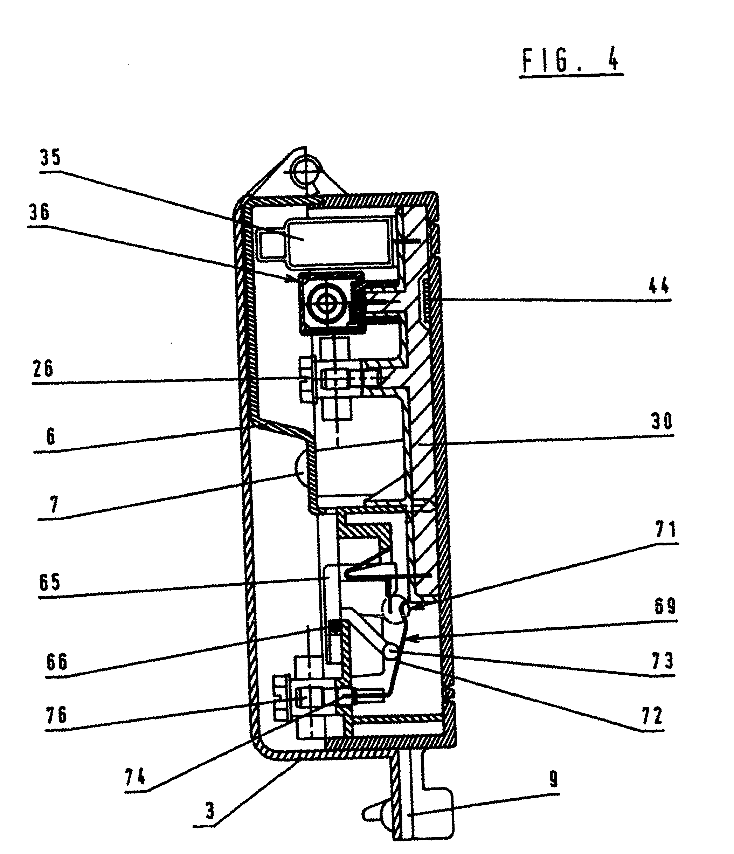

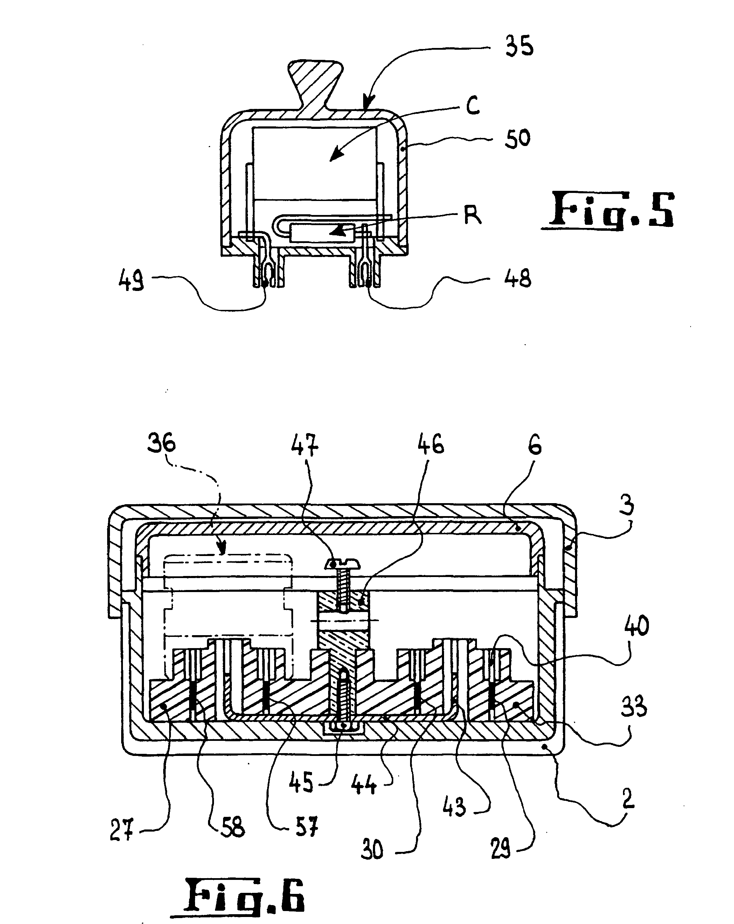

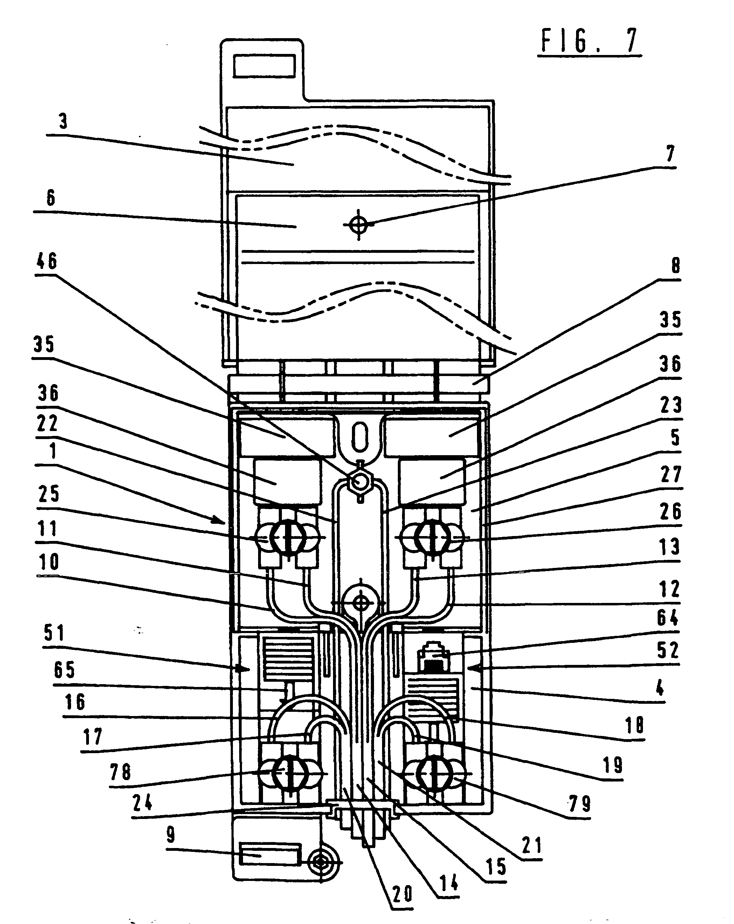

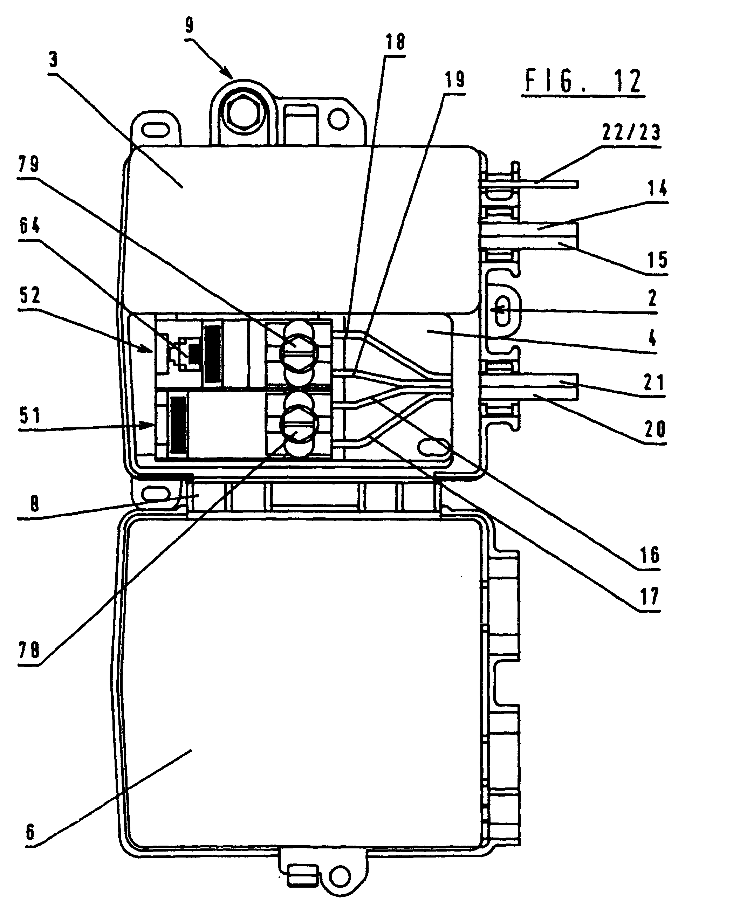

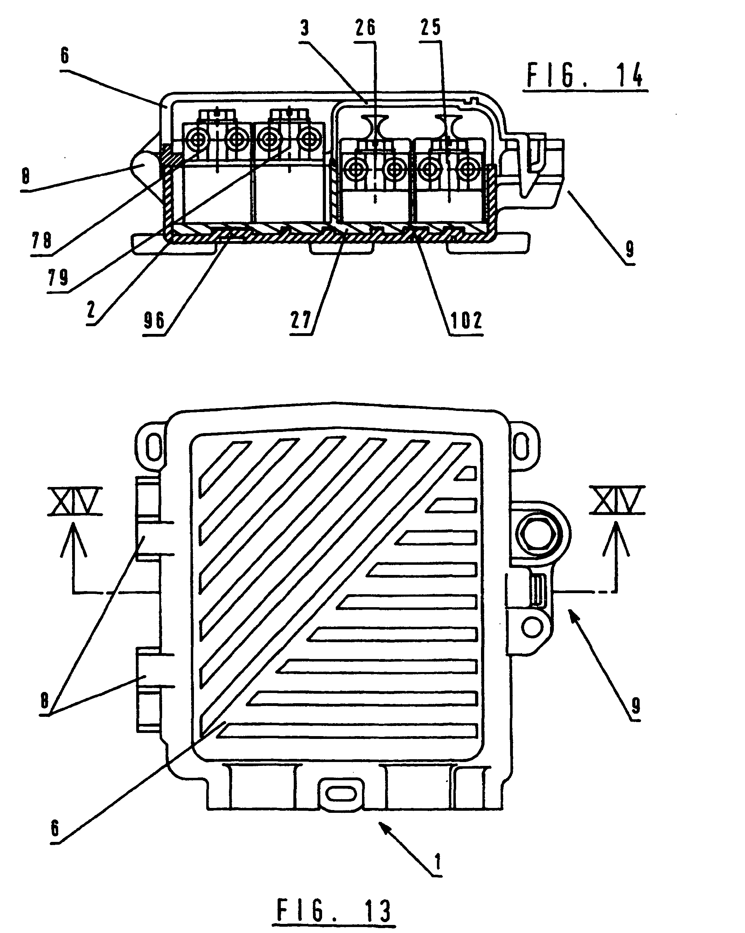

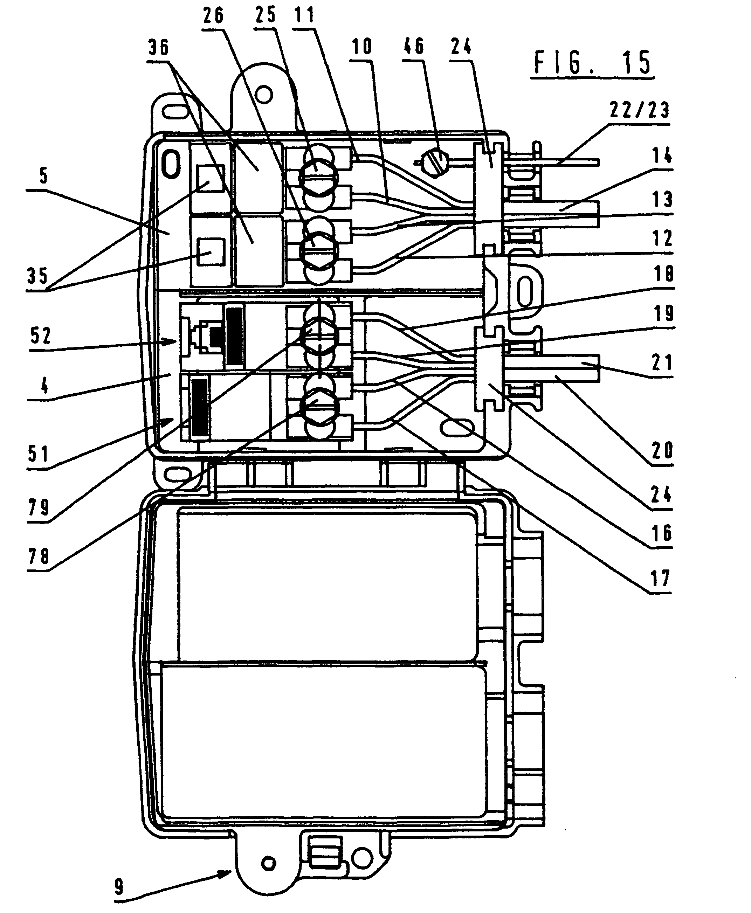

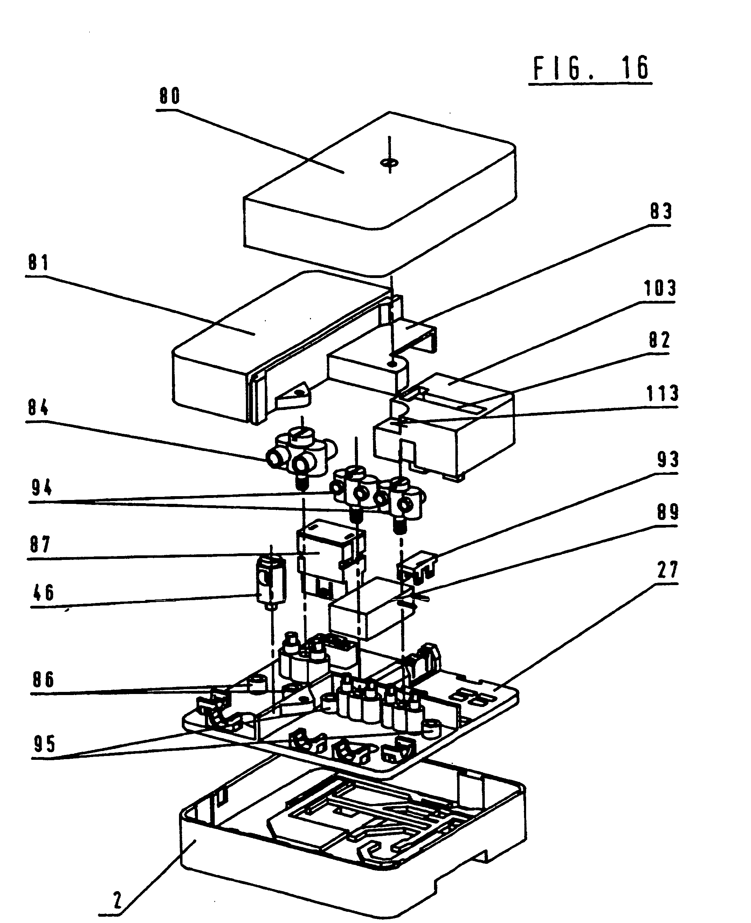

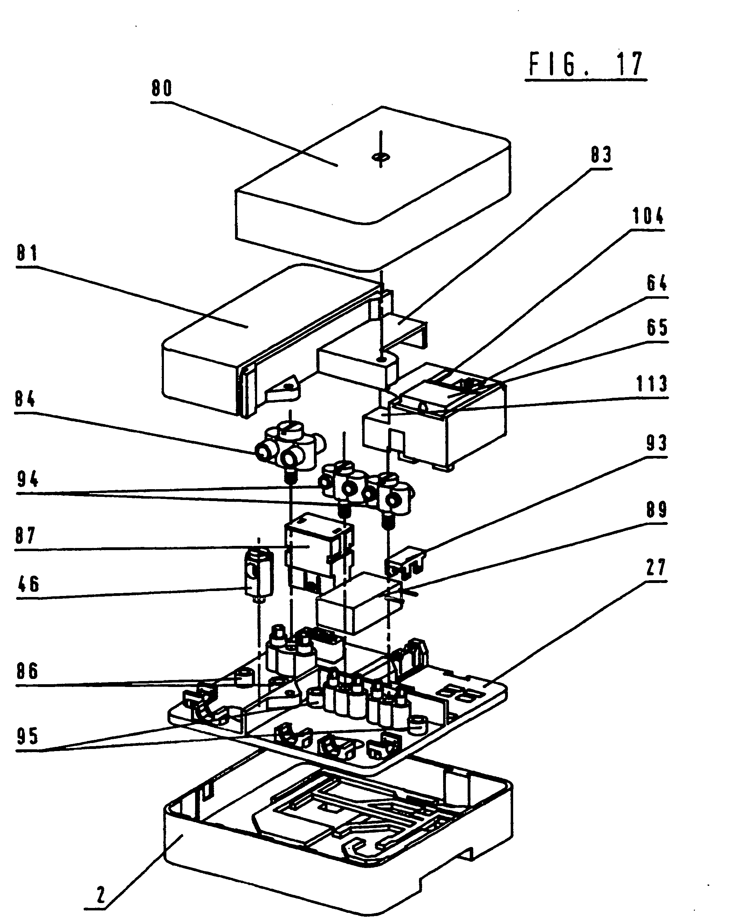

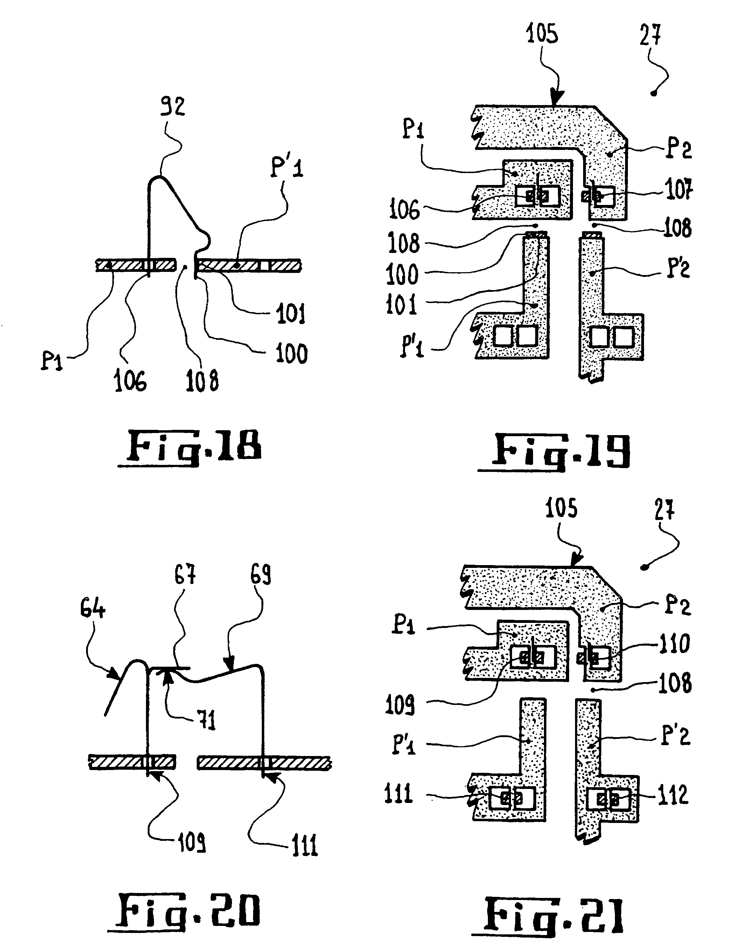

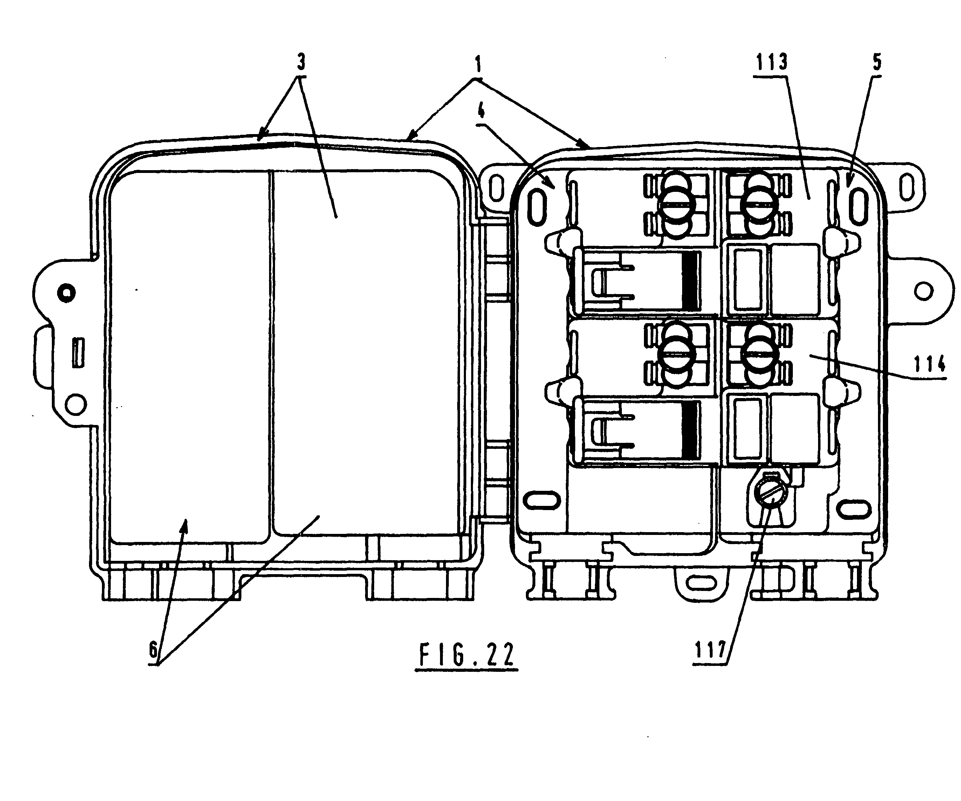

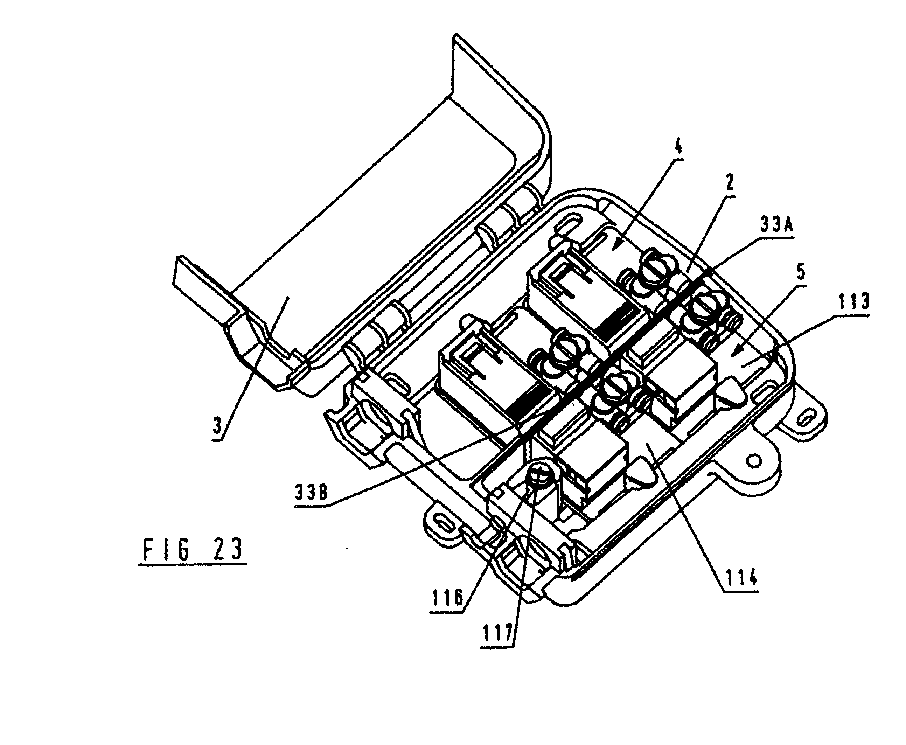

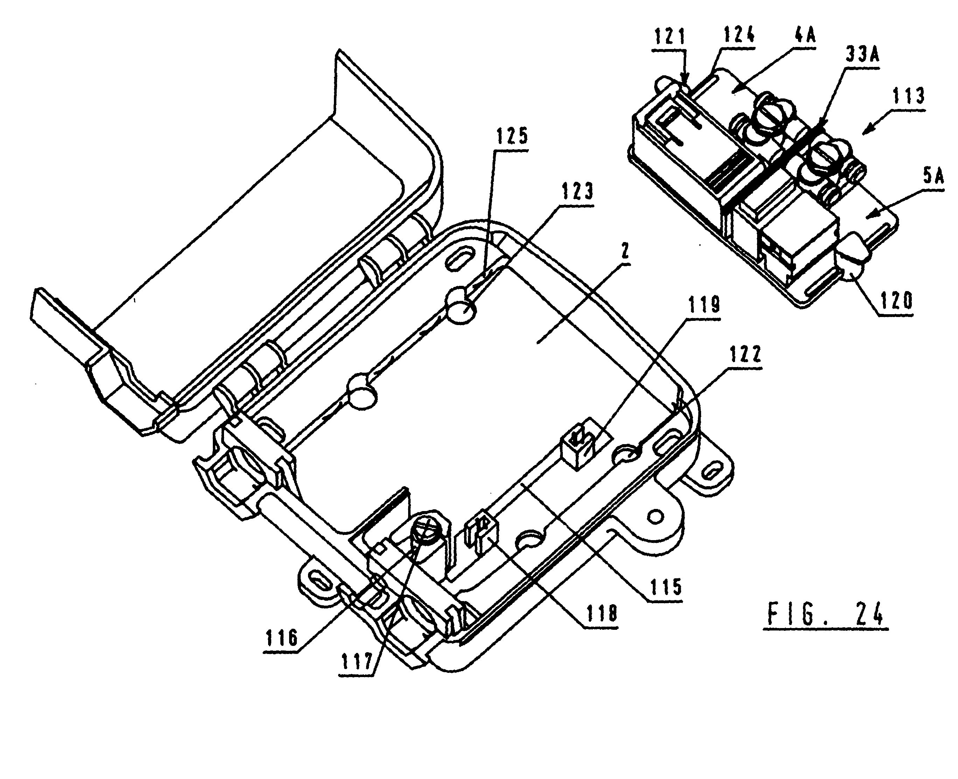

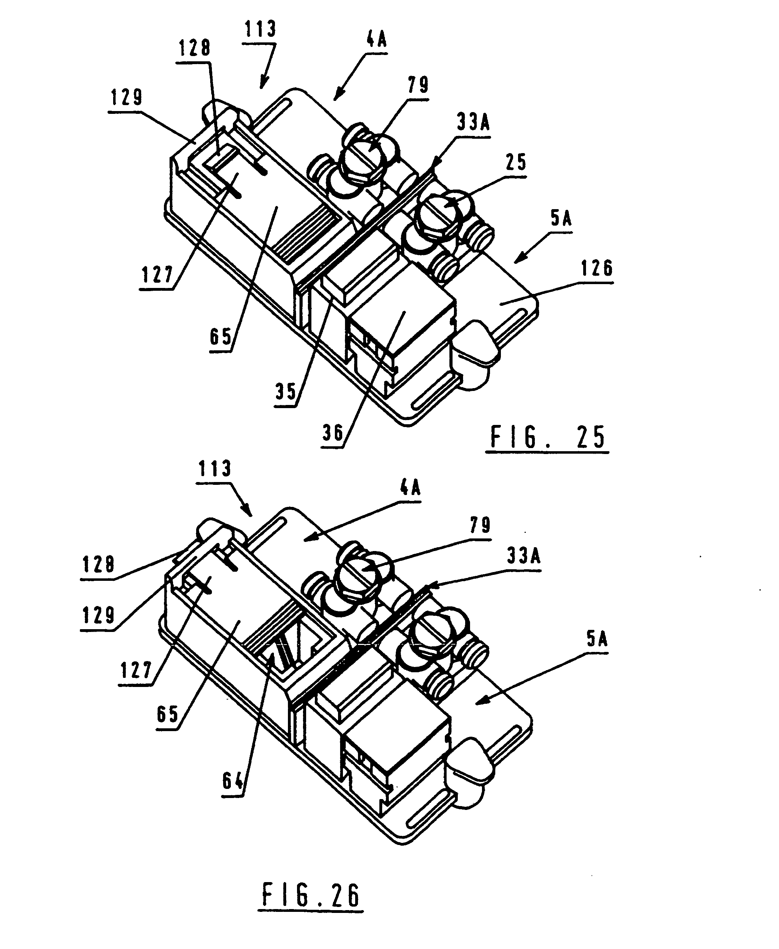

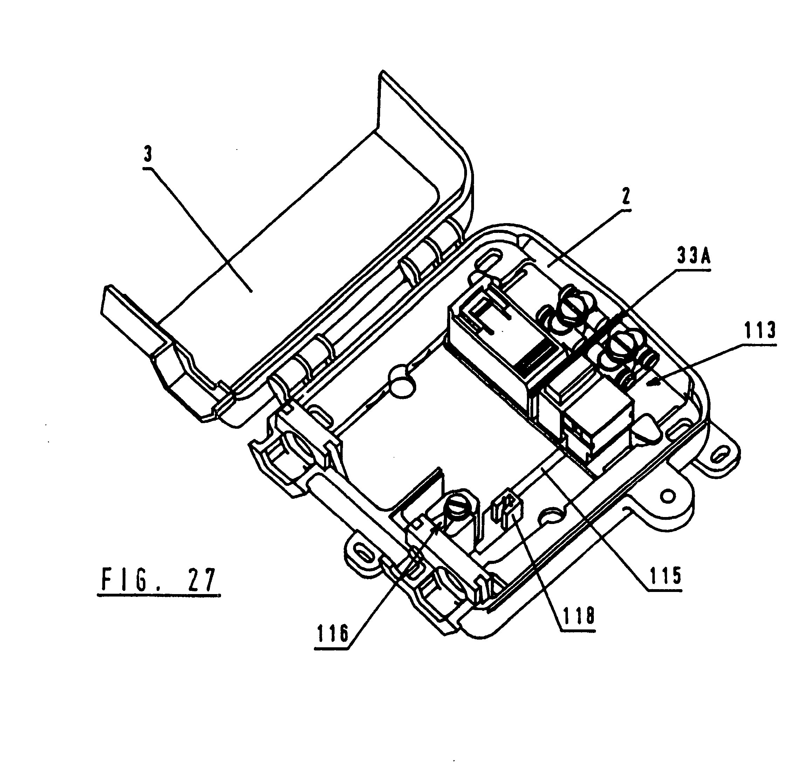

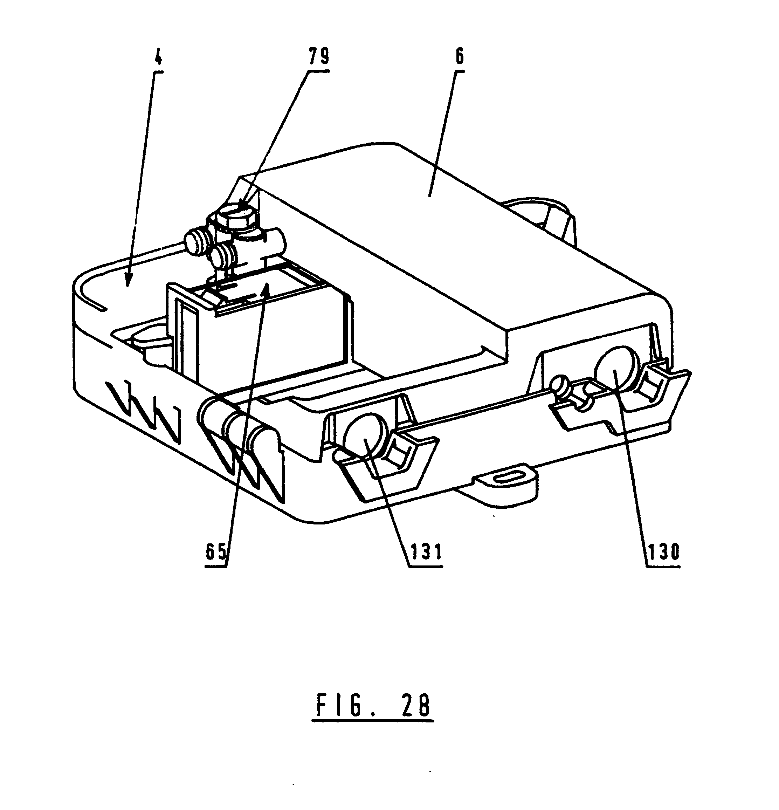

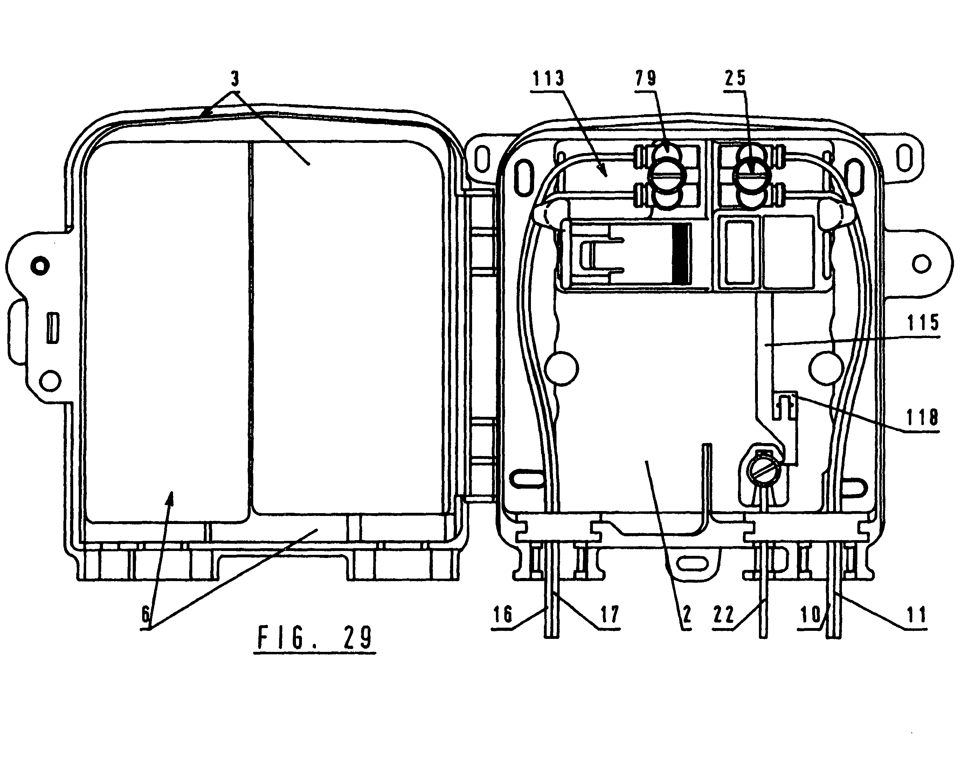

L'invention sera bien comprise, et ses avantages et autres caractéristiques ressortiront, lors de la description suivante de quelques exemples non limitatifs de réalisation de ce dispositif terminal d'interconnexion téléphonique pour un ou plusieurs abonnés, en référence au dessin schématique annexé dans lequel :
. Figure 1 est une vue perspective éclatée partielle d'une première forme de réalisation de ce boîtier terminal d'interconnexion téléphonique d'abonné.
. Figure 2 est une vue perspective éclatée d'un des deux modules spécifiques d'abonné qui équipent le terminal d'interconnexion de la figure 1.
. Figure 3 est une coupe longitudinale partielle du terminal d'interconnexion de la figure 1, avec son volet de fermeture de sa prise de test fermé.
. Figure 4 est une vue semblable à Figure 3, avec ce même volet ouvert.
. Figure 5 est une vue en coupe d'un des deux modules R-C enfichables qui équipent ce même boitier d'interconnexion.
. Figure 6 est une coupe transversale de ce boitier d'interconnexion selon VI-VI de Figure 3.
. Figure 7 est une vue de dessus de ce même boitier d'interconnexion, avec ses deux couvercles ouverts et les fils de lignes d'arrivée et de départ branchés.
. Figure 12 est une vue de dessus, semblable à Figure 7, d'une troisième forme de réalisation de ce boitier d'interconnexion, avec son couvercle principal seul ouvert.
. Figure 13 montre, de même façon, ce boitier selon Figure 12 avec ce même couvercle principal fermé.
. Figure 14 en est une coupe transversale partielle selon XIV-XIV de Figure 13.
. Figure 15 est une vue semblable à Figure 12, montrant ce même boitier avec ses deux couvercles, "principal" et "côté distribution téléphonique", tous deux ouverts.
. Figure 16 est une vue perspective éclatée d'une variante, plus universelle, de réalisation du boitier terminal de la figure 10.
. Figure 17 montre le boitier terminal de la figure 16, mais prêt à être équipé d'un module d'abonné à prise "modular jack" et non pas d'un module d'abonné à conjoncteur français.
. Figures 18 et 19 sont respectivement une vue en coupe et une vue en plan par le dessous de la platine-support, montrant très schématiquement comment s'effectue la connexion du conjoncteur enfichable équipant le boitier selon Figure 16.
. Figures 20 et 21 sont des vues similaires à Figures 18 et 19, mais relatives à la prise modular-jack enfichable équipant le boitier selon Figure 17.
. Figure 22 est une vue semblable à Figure 15, et illustrant une dernière variante de réalisation de ce terminal d'interconnexion ; sur cette figure, les connexions filaires selon Figure 15 ne sont pas représentées.
. Figure 23 est une vue partielle en perspective du terminal d'interconnexion selon Figure 22.
. Figure 24 est une vue semblable à Figure 23, avec la boite d'interconnexion vidée de ses deux modules enfichables, un de ces modules étant figuré au-dessus de cette boite.
. Figures 25 et 26 sont des vues en perspective du module enfichable selon Figure 24, le volet coulissant qui recouvre sa prise de test femelle, ici de type "modular jack", étant respectivement en position de fermeture (Figure 25) et en position d'ouverture (Figure 26).
. Figure 27 est une vue semblable à Figure 24, avec ledit module enfichable mis en place dans ladite boite.
. Figure 28 est une vue perspective partielle qui montre l'interface selon Figure 27, avec le premier couvercle, relatif au côté distributeur, seul refermé, seule la partie côté-abandonné restant visible et donc accessible.
. Figure 29 est une vue en plan du terminal d'interconnexion selon Figure 27, avec les liaisons filaires, d'arrivée et de départ, réalisées.

En se référant tout d'abord à l'ensemble des figures 1 à 7, il s'agit, dans une première forme de réalisation, d'un dispositif terminal d'interconnexion téléphonique qui, dans cet exemple, peut assurer l'interconnexion de deux lignes d'abonné sur deux lignes correspondantes du réseau téléphonique général.

Un terminal d'interconnexion de ce type se présente, d'une manière très générale, sous la forme d'un boitier 1 en matière plastique qui est destiné à être mis en place sur un mur, soit à l'intérieur soit à l'extérieur d'un immeuble ou maison d'habitation ou de bureaux ou autres locaux d'activités.

Il est ici réalisé en deux demi-coques, dont une demi-coque de fond 2 et un couvercle principal conjugué 3 qui se referme sur ce fond 2 de manière pratiquement étanche aux intempéries.

La partie interne du boitier 1 est divisée, ce qui en soi n'est pas nouveau, en deux compartiments bien distincts, dont (voir par exemple les figures 3 et 7) un premier compartiment 4 qui est directement accessible lorsque l'on ouvre le couvercle principal 3 et qui contient toute la connectique d'interconnexion qui est propre aux deux abonnés, et un deuxième compartiement 5 qui n'est accessible que lorsqu'on ouvre un couvercle secondaire 6, à vis de fermeture 7 généralement plombée, et qui contient toute la connectique de connexion qui est propre à l'Administration ou Entreprise chargée de la distribution téléphonique, et qui sera appelée ici "Distributeur" par opposition aux usagers, ou "Abonnés".

Dans cette forme de réalisation, le couvercle principal 3 et le couvercle secondaire 6 sont montés rotatifs sur un axe commun 8. Le premier se ferme par une fermeture à encliquetage 9, et le second par la vis plombable précitée 7. D'autres formes de réalisation de ces couvercles existent, comme on le verra par la suite, tout ceci étant en soi bien classique contrairement à ce qui va suivre maintenant.

Conformément à un premier aspect de l'invention, ce terminal d'interconnexion ne comporte aucune liaison filaire interne, les seuls fils qu'il contient étant (Figure 7) d'une part les quatre fils d'extrémité 10,11 et 12,13 des deux lignes d'arrivée respectives 14 et 15, et d'autre part les quatre fils d'extrémité 16,17 et 18,19 des deux lignes de départ respectives 20 et 21 vers les deux abonnés, ainsi que par ailleurs les deux fils de masse respectifs 22 et 23, tous ces fils étant introduits dans la boite à travers un passe-cloison caoutchouc 24.

Dans le compartiment 5, les deux lignes d'arrivée 14 et 15, qui proviennent donc du distributeur, sont connectées comme représenté à un module respectif 25 et 26 d'interconnexion rapide de lignes téléphoniques à vis de commande et fentes de connexion autodénudantes. Chacun de ces modules est un module, d'un type maintenant largement répandu et vendu par la Société Demanderesse sous la référence "MX", qui est pratiquement identique à celui décrit dans le brevet U.S N° 4.767.354 et en particulier représenté, sous la référence 1, aux figures 1,2,4 et 6 de ce brevet U.S. Cependant, il vient se visser dans un socle 27 en matière plastique qui sert de support à tous les éléments placés dans le boitier 1, et qui est rendu solidaire du fond 2. En outre, il ne comporte pas d'orifices d'introduction, dans un but de raccordement par la partie inférieure fendue de chacun de ses deux contacts métalliques tubulaires 28 à fentes autodénudantes supérieures et inférieures, d'une seconde paire de fils. En revanche, cette partie inférieure fendue du contact tubulaire 28 est solidement enfichée sur la tranche d'une lame métallique longitudinale respective 30,29 (Figures 3 et 1) qui est emprisonnée dans le corps du socle 27 et qui comprend dans ce but une petite partie proéminente conjuguée 31,32.

A noter que les deux contacts 28 peuvent ne pas être des contacts tubulaires, mais des contacts plats à fente autodénudante supérieure ainsi que, préférentiellement, à fente autodénudante inférieure qui vient alors s'enficher sur la tranche de la lame métallique longitudinale correspondante 29 ou 30.

Les deux lames métalliques longitudinales 29 et 30 sont parallèles et chacune situées dans un plan vertical longitudinal. Elles forment en quelque sorte un "bus" métallique qui assure l'interconnexion électrique en parallèle de tous les éléments du boitier 1 qui concernent une même ligne téléphonique. Dans le cas présent, il y a deux lignes téléphoniques, et donc deux paires respectives de lames 29,30 et 57,58 et par suite deux "bus".

La paroi isolante 33 qui définit la séparation entre les deux compartiments 4 et 5 est une partie intégrante du socle 27.

Sur le bus d'interconnexion 29,30 sont, dans le compartiment 5 propre au distributeur, également enfichés un module 36 de protection contre les surtensions et un module 35 destiné aux tests de ligne à distance, dit "module R-C".

Le module de protection 36, qui contient un parasurtension tripolaire 34, est un module de protection enfichable bien classique, et plus précisément un module tel que décrit dans la demande de Brevet en France N° 93 05049 et commercialisé par la Demanderesse sous la référence "MXP".

Ses deux fiches de ligne 37,38 viennent s'encastrer dans deux contacts "lyre" conjugués 40,41 qui sont eux-aussi formés par une proéminence respective de la lame réceptrice respective 29 et 30. Sa fiche médiane de masse 42 vient s'encastrer dans un contact lyre conjugué 43 qui est formé (Figure 1) par une des deux extrémités, relevées à la verticale, d'une lame métallique de masse, transversale et comprise dans le plan horizontal, 44.

La lame transversale 44 est fixée sous le socle 27 par une vis métallique médiane 45 dont l'extrémité pénètre dans un contact métallique médian 46 qui reçoit les fils de masse précités 22 et 23. Les extrémités dénudées de ces deux fils de masse sont serrées dans le contact 46 au moyen d'une vis 47 (voir en particulier la figure 6).

Le module R-C 35 est représenté en détails sur la figure 5. Il vient s'enficher directement sur les deux lames 29 et 30 au moyen de deux contacts-lyre conjugués 48 et 49. Il comporte, dans son enveloppe en matière plastique 50, un condensateur C et une résistance R qui sont branchés en série comme représenté entre les deux fils de ligne. Ce module R-C permet d'effectuer des tests en fréquence de la ligne à partir de l'autocommutateur du distributeur, et donc à distance.

Comme on le voit sur la figure 3, les deux paires de lames 29,30, ou "bus d'interconnexion" ne s'étendent pas seulement le long du compartiment 5, mais se prolongent jusque dans le compartiment 4 qui concerne la connectique propre aux deux abonnés.

Dans ce compartiment 4, la connexion entre chaque bus 58,57-29,30 et les extrémités dénudées des deux fils de ligne correspondants, respectivement 16 et 17 pour une première ligne 20 vers un premier abonné et 18,19 pour la seconde ligne 21 vers l'autre abonné, s'effectue dans chaque cas au moyen d'un module très particulier 51,52 (voir Figures 1 à 7) qui vient s'enficher par enclipsage sur une des deux extrémités 53,54 du socle 27 qui occupent le compartiment 4. Un de ces deux modules est représenté en vue éclatée sur la figure 2.

Lorsqu'un de ces deux modules, par exemple le module 51, est mis en place sur l'extrémité correspondante 53 du socle 27, et deux contacts-lyre 55,56 placés sous ce module viennent enfourcher le bus de ligne correspondant, tel que selon le cas le bus 57,58 ou le bus 29,30 visibles sur la figure 6.

Les deux contacts-lyre 55,56 constituent les extrémités inférieures de deux contacts métalliques plus complexes 59 et 60 (Figures 2 et 3) qui sont prisonniers du corps en matière plastique 61 du module 51.

A leur partie supérieure, ces contacts verticaux sont chacun repliés vers le bas et vers le compartiment 5 pour former deux fines lamelles élastiques 62 et 63 qui constituent les deux classiques contacts de ligne d'une prise femelle 64 de type "modular jack" qui équipe la moitié de la partie supérieure du module 51 qui est la plus proche du compartiment 5.

Cette prise 64 est donc normalement connectée en permanence aux deux bornes 29,30 ou 57,58 de la ligne d'arrivée. L'abonné peut y brancher son propre poste téléphonique afin de tester le bon fonctionnement des circuits placés en amont, c'est-à-dire somme-toute le bon fonctionnement des circuits propres au distributeur et placés en amont de son installation privée.

Cette prise 64 est normalement cachée par un couvercle coulissant 65 qui est rappelé en position de fermeture (Figure 3) par un ressort de rappel 66.

Comme on va le voir maintenant, ce couvercle ou volet 65 a un rôle essentiel, car le fait de l'ouvrir en le tirant contre l'action du ressort 66 vient automatiquement déconnecter les circuits de l'abonné.

Les contacts métalliques 59,60 présentent chacun une patte horizontale 67,68 qui est dirigée vers l'abonné.

L'extrémité libre de cette patte coopère avec celle conjuguée d'une lame souple 69,70 pour former un interrupteur tel que l'interrupteur 71 (Figure 3). Comme on le voit bien sur la figure 3, la partie médiane de chaque lame forme une rampe 72 qui descend en pente douce vers la droite. En position de fermeture du volet 65, une patte 73 solidaire de ce dit volet se rapproche sans s'appuyer sur l'extrémité libre de la rampe 72 permettant ainsi le contact électrique entre les lames 69 et 67 de l'interrupteur 71.

Lorsque, comme montré sur la figure 4, on ouvre le volet 65 en le reculant contre la force du ressort 66 pour dégager l'entrée de la prise modular-jack 64, l'extrémité libre de la patte 73 vient pousser la lame souple 69 vers le bas, ce qui entraîne l'ouverture de l'interrupteur 71, isolant ainsi cette prise modular-jack de la partie restante de l'installation propre à l'abonné.

A leur extrémité opposée à l'interrupteur 71, chacune des lames 69 et 70 est repliée à la verticale et vers le haut pour former des contacts verticaux 74 et 75.

Sur ces deux contacts sont enfichées les deux fentes autodénudantes inférieures des deux contacts tubulaires 76 et 77 d'un autre module d'interconnexion rapide de lignes téléphoniques 78, 79 qui est identique au module 25 ou 26 précité.

Le module 78 reçoit les fils d'abonné 16 et 17, et le module 79 reçoit les fils d'abonné 18 et 19.

On constate bien finalement que d'une part toutes les interconnexions internes au boitier sont effectuées sans liaisons flaires et que d'autre part le fait de dégager le volet 65, pour permettre d'accéder à une prise modular-jack 64 afin d'effectuer soi-même un test du bon fonctionnement de la partie plombée 5 propre au distributeur. vient isoler totalement l'installation privée propre à l'abonné de la ligne téléphonique correspondante qui arrive dans ce boîtier. Un tiers malveillant ne peut quoiqu'il en soit se brancher, dans le compartiment 4, sur la ligne de l'abonné sans que celui-ci ne puisse s'en apercevoir.

Un autre exemple de réalisation parmi bien d'autres encore, est illustré sur les figures 12 à 15.

Ce dispositif se différencie de celui selon les figures 1 à 7 essentiellement par le fait que les compartiments 5 (distribution) et 4 (abonné) sont placés côte-à-côte, et non pas l'un derrière l'autre. En conséquence, comme on le voit sur la figure 14, les liaisons d'interconnexion internes au boitier sont réalisées par un circuit découpé 102 plaqué sous le socle 27 et soutenu par un circuit plastique 96.

Pour le reste, ce circuit reprend des éléments précédemment décrits, qui ne seront donc pas décrits à nouveau ici, mais simplement désignés par de mômes chiffres de référence.

En se référant maintenant aux figures 16 et 17, et tout d'abord à la figure 16, cette dernière possède une partie 83 du couvercle plombé 81, qui ne recouvre en fait que le circuit R-C 89, et une partie très localisée 113 du module 103 de la prise 82 réservant au seul distributeur l'opportunité d'extraire cette dernière.

Le conjoncteur lui-même 82, et son circuit électromécanique 100-101 d'isolation électrique automatique de la ligne propre à l'abonné en cas d'enfichage de ladite fiche téléphonique conjuguée, est constitué comme un module 103 qui est enfichable dans la platine 27.

L'avantage en est qu'il est alors possible, comme schématisé Figure 17, de remplacer le module enfichable 103 à conjoncteur français 82 par un autre module enfichable 104 qui contient cette fois-ci une prise modular-jack 64 possédant les mêmes fonctionnalités, avec son volet à coupure 65, que celles décrites précédemment en référence aux figures 3 et 4.

Ces deux modules 103 et 104 s'enfichent par des contacts-lyre sur un seul et même circuit découpé prévu en conséquence sous la platine 27, comme on l'expliquera maintenant en référence aux figures 18 à 21.

En se référant à ces figures 18 à 21, on a représenté sur les figures 19 et 21 une partie 105 du circuit découpé qui est logé sous la platine 27 équipant les boitiers selon les figures 16 et 17, et plus précisément la partie de ce circuit découpé qui se trouve, selon le cas, sous la prise modular jack 64 du module enfichable 104 de la figure 17 ou sous le conjoncteur 82 du module enfichable 103 de la figure 16.

Comme on le voit sur les figures 18 et 19, les lames élastiques de contact 92 du conjoncteur 82 possèdent chacune un contact-lyre 106,107, qui sont tous deux prévus pour s'enficher respectivement sur la piste P1 et sur la piste P2, qui matérialisent à elles deux la ligne téléphonique d'arrivée (côté branchement extérieur). Leurs autres extrémités libres 100 viennent alors s'appuyer sur les extrémités 101 des pistes conjuguées P'1 et P'2 qui matérialisent la ligne de départ (côté abonné) et qui sont séparées des premières, P1 et P2, par un intervalle d'air 108.

L'introduction d'une fiche mâle conjuguée dans le conjoncteur 82 vient ouvrir le contact électrique 100-101 et donc isoler la ligne d'abonné P'1, P'2.

Dans le cas où, selon Figure 17, on remplace le module 103 à conjoncteur par le module 104 à prise modular jack 64, cette prise modular jack 64 est associée (Figure 20) aux mêmes éléments coupe-circuit 67,69,71 que celle selon Figure 3. Pour l'enfichage sur les pistes P1, P2 d'une part et P'1, P'2 d'autre part, il est prévu, sur la prise 64 et sur les deux lames 69, en tout deux couples de contacts-lyre 109,110 et 111,112 qui s'enfichent respectivement, comme représenté en Figure 21, sur le couple de pistes P1,P2 et P'1, P'2. Le volet 65 selon Figures 17 et 3 vient alors ouvrir l'interrupteur 71 lorsqu'il est reculé pour dégager la prise 64.

On constate finalement bien qu'un seul et même circuit découpé 105 accueille indifféremment le module enfichable 103 à conjoncteur français et le module enfichable 104 à prise modular jack.

Dans la plupart des réalisations qui viennent d'être décrites, par exemple dans celle selon la figure 13, on constate que l'on a affaire à une réalisation qui est figée côté distributeur : le terminal est prévu pour recevoir soit une ou deux lignes (Figure 15), soit uniquement une ligne et pas deux (Figure 17).

Finalement, dans le cas où l'on veut pouvoir brancher soit une, soit deux, lignes d'arrivée côté-distributeur, comme c'est par exemple le cas pour la réalisation selon Figure 15, on constate que le compartiment 5, côté distributeur, est équipé d'éléments qui sont surabondants dans le cas où on ne branche en réalité qu'une seule ligne d'arrivée côté distributeur, qui n'est reliée alors qu'à une seule ligne de départ, côté abonné. En effet, si, dans la réalisation selon Figure 15, on désire seulement ne brancher que la ligne d'arrivée qui correspond aux fils 10 et 11, le client achète néanmoins un terminal d'interconnexion qui est équipé, côté distributeur, de tous les éléments (module 26, prises de branchement des modules associés 35 et 36, circuit découpé réalisant les liaisons électriques) qui sont relatifs au branchement d'une deuxième ligne dont il n'a pas besoin. Généralement néanmoins, il est cependant souhaitable de pouvoir ultérieurement brancher une deuxième ligne sur ce terminal.

Il en résulte une perte économique dommageable, qu'il serait souhaitable d'éviter afin d'accroître la compétitivité de ce terminal d'interconnexion téléphonique.

Un autre petit inconvénient des dispositifs à volet 65 de fermeture de la prise de test "modular jack" côté abonné réside dans le fait que, lorsque l'on a ouvert ce volet pour dégager cette prise, ce qui entraine ipso-facto la déconnexion de la ligne côté abonné, on est alors obligé de maintenir ce volet ouvert avec le doigt, ce qui mobilise pratiquement une main du manipulateur. En effet, ces volets sont équipés d'un ressort 66 de rappel élastique en position de fermeture, mais pas d'un système de blocage en position d'ouverture.

On décrira maintenant, en référence aux figures 22 à 29, une dernière variante de réalisation qui permet de remédier à ces deux inconvénients des dispositifs précédemment décrits.

La figure 22 est une vue en plan de cette dernière variante, les deux couvercles de fermeture du boitier étant ouverts comme c'est le cas pour la réalisation représentée Figure 15 à laquelle il conviendra de comparer cette figure 22. Ce terminal d'interconnexion est ici équipé, dans le compartiment 5 côté distributeur comme dans le compartiment 4 côté abonné, de tous les éléments et modules relatifs à deux lignes d'arrivée distinctes, connectées par circuits découpés, comme précédemment, à deux lignes de départ respectives vers deux lignes d'abonnés distinctes. On verra par la suite que ce terminal peut aussi être équipé, et c'est son avantage principal, uniquement des éléments et modules relatifs à une seule ligne d'arrivée, connectée à une seule ligne correspondante de départ vers l'abonné.

Sur cette figure 22, les liaisons filaires 10 à 14, 16 à 21, et 22 ou 23, de la figure 15, ne sont pas représentées pour ne pas alourdir le dessin.

Jusqu'à présent, tout a été fixé sur l'idée que les deux compartiments 5 et 4 devaient être traités distinctement, justement parce que ce sont deux compartiments. On s'est donc attaché à équiper chacun de ces deux compartiments distinctement en fonction des éléments qu'il doit recevoir, ce qui entraine le premier désavantage que l'on vient de citer. Dans la réalisation selon Figure 15 par exemple, on aboutit ainsi à une réalisation horizontale figée qui comporte à droite toute la connectique relative au compartiment 5 et à gauche toute celle relative au compartiment 4, ces deux connectiques étant situées de part et d'autre d'une cloison, réelle ou virtuelle, de séparation, et étant totalement conçus comme séparés l'un de l'autre, à part bien entendu les circuits découpés d'interconnexion locale.

La réalisation selon les figures 22 à 29 fait abstraction du préjugé selon lequel deux compartiments distincts, ici les compartiments 5 et 4, doivent être traités distinctement. Au lieu donc de prévoir deux compartiments 5 et 4 séparés à tous points de vue, on prévoit de constituer ceux-ci au moyen d'au moins deux modules enfichables qui comportent chacun un demi-compartiment 5A relatif à une ligne d'arrivée et un demi-compartiment 4A relatif à une ligne de départ, et qui sont aptes à venir s'enficher, dans un fond de boite récepteur 2 du boitier 1, fond de boite qui à l'origine est pratiquement vide de connectique en dehors éventuellement des liaisons de masse, l'un contre l'autre pour pouvoir ainsi, si besoin est, recréer les deux compartiments 5 et 4 complets.

Chacun de ces demi-compartiments comporte la connectique complète relative à une ligne d'arrivée et une ligne de départ associée. Si l'on n'est intéressé que par une seule ligne d'arrivée et de départ, il suffit alors d'enficher, dans cette boite réceptrice pratiquement vide, un seul de ces modules. L'autre moitié de la boite reste alors vide, et ne comporte donc pas comme précédemment d'éléments non utilisés.

A contrario, en enfichant l'autre module contre le premier on obtient deux compartiments 4,5 complets comme c'est le cas pour la figure 15, avec toute la connectique relative à deux lignes d'arrivée respectivement connectées à deux lignes de départ.

En observant attentivement les figures 22 à 24, on constate que l'on est somme-toute en présence d'une réalisation horizontale, à contrario de la réalisation selon Figure 15 qui est verticale.

Comme on le voit bien sur la figure 24, la portion de boite isolante 2 qui forme le fond du boitier de ce terminal est, avant qu'elle ne reçoive soit un soit deux modules enfichables tels que le module 113 (Figure 24) et/ou le module identique 114 (Figures 22 et 23), pratiquement vide. Elle ne contient en effet, comme élément de connectique, qu'une bande métallique 115 en circuit découpé, qui constitue la liaison de masse, et qui est reliée d'une part à une borne 116 apte à recevoir de l'extérieur un fil de masse et connecter ce fil au moyen d'une vis métallique de serrage 117, et d'autre part aux parties médianes, de connexion de masse, 118 et 119 de deux prises femelles tri-broches de connexion par enfichage de deux modules de protection tels que les modules 36,87, des réalisations précédentes. Une telle prise tri-broches est visible, sous la référence 88, sur la figure 9, et la même prise est un peu mieux visible sur la figure 10.

Selon l'invention, ce fond de boite isolant et pratiquement vide 2 est conçu pour recevoir au choix soit un, soit deux modules enfichables 113 et/ou 114. A cet effet, deux pions de centrage 120 et 121 sont prévus sur chaque module enfichable pour coopérer avec deux cavités réceptrices correspondantes, respectivement 122 et 123, de la boite 2. Des lamelles souples 124 sont en outre prévues sur chaque module pour coopérer en encliquetage avec des parties bombées correspondantes 125 du fond de boitier 2.

La figure 27 montre le fond de boitier 2 après enfichage et mise en place du module 113, tandis que la figure 23 montre ce même fond de boite 2 après enfichage et mise en place du module 114 également.

A part la connectique de masse 116,117,115,118,119 précitée, qui fait partie du fond de boite 2, toute la connectique relative à une seule ligne d'arrivée et de départ est contenue dans le module 113 pour une première ligne et dans le module 114 pour une deuxième ligne. Une cloison 33A sépare physiquement, dans le module 113 par exemple, le compartiment, ou plutôt "demi-compartiment", 5A qui contient la connectique d'arrivée qui est celle du distributeur, du compartiment ou "demi-compartiment" 4A qui contient la connectique de départ vers l'abonné.

Le module 114 comporte de même une cloison identique 338 et, après enfichage des deux modules 113 et 114 selon Figure 23, ces deux demi-cloisons 33A et 33B sont alignées pour constituer à elles-deux une cloison complète de séparation, telle que la cloison 33 de la figure 1, entre les deux compartiments alors complets 4 et 5.

Un des deux modules enfichables, par exemple le module 113, est représenté de manière agrandie sur les figures 25 et 26, respectivement avec son volet coulissant 65 de fermeture de sa prise de test, ici de type "modular jack", 64 côté abonné d'une part fermé (Figure 25) et d'autre part ouvert (Figure 26). Rappellons à ce sujet que, conformément par exemple à la réalisation selon les figures 1 à 7,12,15, et 17, ce volet 65 est un volet qui est rappellé élastiquement en position de fermeture par un ressort 66, et dont l'ouverture entraîne ipso-facto la déconnexion de la ligne correspondante côté abonné.

Outre la prise de test 64 et son volet de fermeture 65, le compartiment 4A côté abonné comporte un classique module 79 de branchement rapide des deux fils de départ vers l'abonné (à comparer avec la figure 15).

Le compartiment 5A côté distributeur comporte (à comparer avec la figure 15), un classique module 25 de connexion rapide des deux fils d'arrivée en provenance du distributeur, ainsi que d'une part la prise de réception d'un module RC éventuel et d'autre part les deux autres fiches femelles qui viennent constituer, avec la fiche femelle de masse précitée 119 qui est déjà en place dans le fond de boite 2 (voir Figure 24), la prise femelle de réception d'un module de protection éventuel 36.

Dans le module 113, toutes les interconnexions sont faites, comme dans la plupart des réalisations précédentes, au moyen d'un circuit découpé, non représenté, qui est incrusté sous la platine 126 du module 113.

Le volet coulissant 65 est muni d'une patte semi-rigide 127, en porte-à-faux et dont l'extrémité libre est équipée d'un crochet d'encliquetage 128.

Lorsque, comme représenté sur la figure 26, on ouvre totalement le volet 65 pour dégager la prise "modular jack" 64, la patte semi-rigide 127 vient passer sous une traverse correspondante 129 du corps du module 113, de sorte qu'en fin de course d'ouverture de ce volet, le crochet 128 vient s'encliqueter derrière cette traverse 129, maintenant ainsi le volet 65 en position d'ouverture, contre la force de son dispositif 66 de rappel élastique.

Pour refermer le volet 65, il suffit alors de presser le crochet 128 vers le bas, afin de le dégager ainsi de sa traverse de retenue 129 et libérer le ressort de rappel 66 de ce volet.

La Figure 28 montre comment, en refermant seulement le demi-couvercle intérieur 6 (comparer avec la figure 3), seul le compartiment 4 côté abonné reste accessible (le couvercle extérieur 3 n'est pas représenté sur cette figure 28). Sur cette figure 28, on distingue nettement les deux passe-cloison 130 et 131 au travers desquels passeront les liaisons filaires, respectivement côté distributeur et côté abonné.

Enfin, la figure 29 est une vue en plan semblable à la figure 22, mais avec seulement le module 113 en place dans le fond de boite 2 et les trois liaisons filaires 22 (masse), 10 et 11 (ligne), côté distributeur mises en place et branchées, et les deux liaisons filaires de ligne 16 et 17 côté abonné mises en place et branchées (comparer avec la figure 15).

Comme il va de soi, l'invention n'est nullement limitée aux exemples de réalisation qui viennent d'être décrits, et bien d'autres formes d'exécutions, comportant les deux mêmes fonctionnalités, de ce dispositif terminal sont envisageables. Le compartiment 5 pourrait par exemple recevoir d'autres modules fonctionnels enfichables que le module de protection 36 et le module R-C 35.

## Revendications

1. Dispositif terminal d'interconnexion téléphonique d'au moins un abonné, comprenant :
- un boîtier (1) divisé en deux compartiments, dont un premier compartiment (5) contient une connectique propre à une Administration ou Entreprise chargée de la distribution téléphonique, et dont un second compartiment (4) contient une connectique propre à la ou aux lignes téléphoniques de l'abonné (20, 21) qui se raccordent à la ou aux lignes correspondantes (14, 15) de l'Administration ou Entreprise, par l'intermédiaire de ce dispositif terminal d'interconnexion, et
- une prise de test, présente dans le second compartiment (4), destinée à chaque ligne (20, 14 ; 21, 15), et composée d'une prise téléphonique femelle (64) branchée directement sur la ligne (14, 15) de ladite Administration ou Entreprise et en sortie du premier compartiment (5) réservé à cette dernière, la prise de test étant apte à recevoir une prise mâle conjuguée qui équipe normalement un terminal ou poste téléphonique,
**caractérisé en ce qu'**il comprend en outre :
- des interconnexions électriques réalisées par des moyens de liaison non-filaires tels que des lames métalliques (29, 30) ou des circuits métalliques découpés (97, 102) ;
- un volet de fermeture (65) de ladite prise de test (64), associé à des moyens électromécaniques (66, 71, 72, 73) qui, lorsqu'on ouvre ce volet (65) pour dégager la prise de test (64) qu'il recouvre, afin de brancher la prise mâle conjuguée dans ladite prise femelle (64), entraînent automatiquement, par effet d'interrupteur électrique (71), la déconnexion électrique des circuits de ligne (74, 21) placés en aval de cette prise de test (64), c'est-à-dire des circuits de ligne propres à l'installation privée de l'abonné ; et
- au moins un module enfichable (51, 52, 104) qui contient notamment ladite prise téléphonique femelle (64) ainsi que ledit volet de fermeture (65) associé audits moyens électromécaniques (66, 73, 72, 71).

2. Dispositif selon la revendication 1, **caractérisé en ce que** les connexions, dans ledit boîtier (1), des extrémités des fils de lignes (14, 15, 20, 21) d'arrivée (10, 11 ; 12, 13) et de départ (16, 17 ; 18, 19) sont réalisées par des modules (25, 26, 78, 79) d'interconnexion rapide de lignes téléphoniques à fentes autodénudantes et vis de commande.

3. Dispositif selon la revendication 2, **caractérisé en ce que**, lesdits modules (25, 78) étant du type comportant chacun deux contacts métalliques (28, 76) à fentes autodénudantes supérieures et inférieures, ces modules (25, 78) ne comportent pas d'orifices d'introduction, dans un but de raccordement par la partie inférieure fendue de chacun de ses deux contacts (28, 76), d'une seconde paire de fils, mais en revanche cette partie inférieure fendue est enfichée sur la tranche d'une lame métallique (30, 74) qui fait partie desdites interconnexions électriques contenues dans ledit boîtier (1).

4. Dispositif selon l'une des revendications précédentes, **caractérisé en ce que** ledit premier compartiment (5) est apte à recevoir, par enfichage sur lesdites liaisons non-filaires (29, 30) des modules fonctionnels auxiliaires, tels que par exemple un module de protection (36) à parasurtension (34) et/ou un module R-C (35).

5. Dispositif selon l'une des revendications précédentes, **caractérisé en ce qu'**il est agencé pour recevoir, dans ledit second compartiment (4), un module enfichable (104) muni d'une prise « modular-jack » (64) comme prise de test.

6. Dispositif selon la revendication 5, **caractérisé en ce qu'**il est agencé (109-112) de façon à n'utiliser qu'un seul et même circuit découpé (105) pour recevoir le module enfichable (104).

7. Dispositif selon la revendication 1, **caractérisé en ce que** le fond de boîte (2) de boîtier (1) est apte à recevoir au choix soit un, soit au moins deux modules enfichables (113, 114) qui comportent chacun un demi-compartiment (5A) muni de la connectique relative à une ligne d'arrivée et un demi-compartiment (4A) muni de la connectique relative à une ligne de départ, ces modules (113, 114) étant aptes à venir s'enficher dans ledit fond de boîte récepteur (2) qui est, à l'état nu, pratiquement vide de connectique, contenant des liaisons de masse (115, 116, 117, 118, 119), ces modules (113, 114) s'enfichant l'un contre l'autre pour ainsi pouvoir recréer, dans le cas où ils sont tous enfichés dans ce fond de boîte (2), les deux compartiments complets (4, 5) relatifs au branchement d'un nombre de lignes, qui comportent chacune une ligne d'arrivée et une ligne de départ, qui est égal au nombre de modules enfichés.

8. Dispositif selon la revendication 1, **caractérisé en ce que** le volet (65) comporte des moyens (127, 128) aptes à le retenir en position d'ouverture même s'il est muni d'un dispositif (66) de rappel en position de fermeture, ces moyens coopérant avec un organe fixe (129) du terminal.

9. Dispositif selon la revendication 8, **caractérisé en ce que** ces moyens de retenue sont constitués par une patte semi-rigide (127) du volet (65), dont l'extrémité en porte-à-faux comporte un crochet d'encliquetage (128) apte à coopérer avec un organe conjugué (129) du terminal.

## Patentansprüche

1. Anschlussgerät für die Telefonverbindung zumindest eines Teilnehmers, mit:
- einem in zwei Abteile aufgeteilten Gehäuse (1), wobei ein erstes Abteil (5) einen für eine mit der Telefonvernetzung beauftragte Behörde oder ein damit beauftragtes Unternehmen geeigneten Anschluss aufweist und ein zweites Abteil (4) einen für die Telefonleitung(en) des Teilnehmers (20, 21) geeigneten Anschluss aufweist, die mittels dieses Anschlussgeräts für die Verbindung mit der/den zugehörigen Leitung(en) (14, 15) der Behörde oder des Unternehmens verbindbar sind, und
- einer in dem zweiten Abteil (4) vorgesehenen Testdose, für jede Leitung (20, 14; 21, 15), bestehend aus einer aufnehmenden Telefondose (64), die direkt auf der Leitung (14, 15) der Behörde oder des Unternehmens aufgeschaltet ist und außerhalb des ersten Abteils (5) vorgesehen ist, das dafür reserviert ist, wobei die Testdose dazu geeignet ist, einen ihr zugeordneten aufzunehmenden Stecker aufzunehmen, der normalerweise an einem Fernsprechgerät oder einem Telefonanschluss vorgesehen ist,
**dadurch gekennzeichnet, dass** das Gerät außerdem folgendes aufweist:
- elektrische Verbindungen, die mittels drahtloser Verbindungsmittel wie beispielsweise metallischer Plättchen (29, 30) oder ausgeschnittener metallischer Kreise (97, 102) realisiert sind;
- einen Verschlussschieber (65) der Testdose (64), der mit elektromechanischen Mitteln (66, 71, 72, 73) verbunden ist, die, wenn man den Schieber (65) öffnet, um die Testdose (64), die er bedeckt, freizulegen, um den aufzunehmenden ihr zugeordneten Stecker in die aufnehmende Dose (64) hineinzustecken, durch die Wirkung eines elektrischen Schalters (71) automatisch die elektrische Trennung von Leitungen (74, 21), die sich unterhalb dieser Testdose (64) befinden, herbeiführt, das heißt von Leitungen, die für die private Installation des Fernsprechteilnehmers geeignet sind; und
- zumindest ein einsteckbares Modul (51, 52, 104), das diese aufnehmende Telefondose (64) sowie den Verschlussschieber (65) beinhaltet, der den elektromechanischen Mitteln (66, 73, 72, 71) zugeordnet ist.

2. Anschlussgerät nach Anspruch 1, **dadurch gekennzeichnet, dass** die Anschlüsse für die Eingangs- (10, 11; 12, 13) und Ausgangsenden (16, 17; 18, 19) der Leiterdrähte (14, 15, 20, 21) in dem Gehäuse (1) mit Modulen (25, 26, 78, 79) für einen schnellen Anschluss von Telefonleitungen realisiert sind, die selbstreinigende Spalten und Steuerschrauben aufweisen.

3. Anschlussgerät nach Anspruch 2, **dadurch gekennzeichnet, dass** diese Module (25, 78) so ausgestaltet sind, dass sie jeweils zwei metallische Kontakte (28, 76) mit oberen und unteren selbstreinigenden Spalten aufweisen, wobei diese Module (25, 78) keine Einführöffnungen aufweisen, um ein zweites Paar von Drähten mittels des unteren gespaltenen Teils jedes seiner beiden Kontakte (28, 76) anzuschließen, wobei aber dafür dieser gespaltene untere Bereich auf den Streifen eines metallischen Plättchens (30, 74) aufgesteckt ist, der Teil der in dem Gehäuse (1) vorhandenen elektrischen Anschlüsse ist.

4. Anschlussgerät nach einem der vorangehenden Ansprüche, **dadurch gekennzeichnet, dass** das erste Abteil (5) dazu geeignet ist, durch Aufstecken auf die genannten drahtlosen Verbindungen (29, 30) zusätzliche Funktionsmodule aufzunehmen, wie beispielsweise ein Schutzmodul (36) als Überspannungsableiter (34) und/oder ein R-C-Modul (35).

5. Anschlussgerät nach einem der vorangehenden Ansprüche, **dadurch gekennzeichnet, dass** es so ausgestaltet ist, dass es in dem zweiten Abteil (4) ein aufsteckbares Modul (104) aufnehmen kann, das mit einer "modularjack"-Dose (64) als Testdose versehen ist.

6. Anschlussgerät nach Anspruch 5, **dadurch gekennzeichnet, dass** es so ausgestaltet ist (109-112), dass es nur ein und denselben ausgeschnittenen Schaltkreis (105) verwendet, um das Aufsteckmodul (104) aufzunehmen.

7. Anschlussgerät nach Anspruch 1, **dadurch gekennzeichnet, dass** der Boden (2) des Gehäuses (1) dazu geeignet ist, entweder ein oder zwei Aufsteckmodule (113, 114) aufzunehmen, die jeweils ein halbes Abteil (5A) aufweisen, das mit dem Anschluss für eine Eingangsleitung versehen ist, und ein halbes Abteil (4A), das mit dem Anschluss für eine Ausgangsleitung versehen ist, wobei diese Module (113, 114) dazu geeignet sind, in den Boden (2) des Gehäuses eingesteckt zu werden, der im nackten Zustand praktisch frei von Anschlüssen ist und Massenverbindungen (115, 116, 117, 118, 119) aufweist, wobei diese Module (113, 114) gegeneinander gesteckt werden, um so in dem Fall, in dem sie alle in dem Boden (2) des Gehäuses eingesteckt sind, die beiden vollständigen Abteile (4, 5) für das Aufschalten einer Anzahl von Leitungen neu zu gestalten, welche Leitungen jeweils eine Eingangsleitung und eine Ausgangsleitung aufweisen, welche Anzahl gleich der Anzahl der aufgesteckten Module ist.

8. Anschlussgerät nach Anspruch 1, **dadurch gekennzeichnet, dass** der Schieber (65) Mittel (127, 128) aufweist, die dazu geeignet sind, den Schieber in seiner geöffneten Stellung zu halten, selbst wenn er mit einer Einrichtung (66) versehen ist, die ihn in die geschlossene Stellung zurückführen möchte, wobei diese Mittel mit einem festen Organ (129) des Anschlusses zusammenwirken.

9. Anschlussgerät nach Anspruch 8, **dadurch gekennzeichnet, dass** die Rückhaltemittel durch eine halb starre Klaue (127) des Schiebers (65) gebildet werden, dessen Ende eine fliegend gelagerte Sperrklinke (128) aufweist, die dazu geeignet ist, mit einem zugehörigen Organ (129) des Anschlusses zusammenzuwirken.

## Claims

1. Terminal device for telephone interconnection of at least one subscriber, comprising:
- a box (1) divided into two compartments, of which first compartment (5) contains connectors for an Administration or private company in charge of the telephone distribution, and of which second compartment (4) contains connectors for the telephone line or lines of the subscriber (20, 21) which are connected to the corresponding line or lines (14, 15) of the Administration or private company, via this terminal interconnection device, and
- a test socket, present in the second compartment (4), designed for each line (20, 14 ; 21, 15), and composed of a telephone female socket (64) connected directly on the line (14, 15) of said Administration or private company and at output of the first compartment (5) reserved therefore, the test socket being adapted to receive a conjugate male plug which normally equips a terminal or telephone set,
**characterized in that** it further comprises:
- electrical interconnections made by non-wire connecting means such as metal blades (29, 30) or cut-out metal circuits (97, 102);
- a closing flap (65) of said test socket (64), associated with electro-mechanical means (66, 71, 72, 73) which, when this flap (65) is opened to disengage the test socket (64) that it covers, in order to connect the conjugate male plug into said female socket (64), automatically leading, by electrical switch effect (71), the electrical disconnection of the line circuits (74, 21) placed downstream from this test socket (64), i.e. the line circuits for the subscriber's private installation; and
- at least one plug-in module (51,52, 104) which contains especially said telephone female socket (64) as well as said closing flap (65) associated with said electro-mechanical means (66, 73, 72, 71).

2. Device according to claim 1, **characterized in that** the connections, in said box (1), of the ends of the incoming (10, 11; 12, 13) and outgoing (16, 17; 18, 19) lines wires (14,15,20,21) are made by modules (25, 26, 78, 79) for rapid interconnection of telephone lines with self-stripping slots and control screws.

3. Device according to claim 2, **characterized in that** said modules (25, 78) being of the type each comprising two metal contacts (28, 76) with upper and lower self-stripping slots, these modules (25, 78) do not comprise orifices for introduction, in a purpose of connection by the lower slot part of each of its two contacts (28, 76), of a second pair of wires, but, on the contrary this lower slot part is plugged on the edge of a metal blade (30, 74) which form part of said electrical interconnections contained in said box (1).

4. Device according to any one of the preceding claims, **characterized in that** said first compartment (5) is adapted to receive, by plugging on said non-wire connections (29, 30) auxiliary functional modules, such as for example a protection module (36) with overvoltage arrester (34) and/or an R-C module (35).

5. Device according to any one of the preceding claims, **characterized in that** it is arranged to receive, in said second compartment (4), a plug-in module (104) provided with a "modular-jack" socket (64) as test socket.

6. Device according to claim 5, **characterized in that** it is arranged (109-112) so as to use only one and same cut-out circuit (105) to receive the plug-in module (104).

7. Device according to claim 1, **characterized in that** the bottom (2) of the box (1) is adapted to receive, as desired either one or at least two plug-in modules (113, 114) which each comprise a half-compartment (5A) provided with the connectors relative to an incoming line and a half-compartment (4A) provided with the connectors relative to an outgoing line, these modules (113, 114) being adapted to plug in said bottom of receiving box (2) which is, in the bare state, almost empty of connectors, containing earth connections (115, 116, 117, 118, 119), these modules (113, 114) plugging against each other to be able to recreate, in the case where they are all plugged in this box bottom (2), the two complete compartments (4, 5) relative to the connection of a number of lines, which each comprise an incoming line and an outgoing line, which is equal to the number of plugged-in modules.

8. Device according to claim 1, **characterized in that** the flap (65) comprises means (127, 128) adapted to retain it in open position even if it is provided with a biasing device (66) into closed position, these means cooperating with a fixed member (129) of the terminal.

9. Device according to claim 8, **characterized in that** these retaining means are formed with a semi-rigid tab (127) of the flap (65), of which the end in overhang comprises a clipping hook (128) adapted to cooperate with a conjugate member (129) of the terminal.
